# FASCICULE DE BREVET EUROPEEN

(11) **EP 4 074 172 B1**
(45) Date de publication et mention de la délivrance du brevet: **19.11.2025**
(21) Numéro de dépôt: 22167421.1
(22) Date de dépôt: 08.04.2022
(51) Int. Cl.: A01K 5/02

(54) **TRÉMIE D'ALIMENTATION DU BÉTAIL**
FUTTERZUFÜHRTRICHTER FÜR VIEH
LIVESTOCK FEED HOPPER

(30) Priorité: 13.04.2021 FR 2103771
(43) Date de publication de la demande: 19.10.2022
(73) Titulaire: Liot, Pierre, 86450 Pleumartin (FR)
(72) Inventeur: Liot, Pierre, 86450 Pleumartin (FR)
(74) Mandataire: Alatis

(56) Documents cités:
- CH-A- 399 056
- GB-A- 190 920 898
- US-A- 3 211 339
- US-A1- 2010 018 467

## Description

La présente demande de brevet se rapporte à une trémie d'alimentation pour le bétail.

Pour alimenter le bétail, on connaît de la technique antérieure des auges qu'on peut remplir d'aliments tels que des granulés ou du foin, ce remplissage pouvant être effectué manuellement ou avec des moyens mécaniques tels qu'une trémie distributrice tractée.

Ce remplissage peut aussi être effectué de manière automatique par une trémie fixe (appelée aussi « nourrisseur ») disposée au-dessus de l'auge, cette trémie fixe comportant dans sa partie inférieure une ouverture de sortie permettant la chute des aliments dans l'auge par gravité, au fur et à mesure que le bétail se nourrit. L'aliment perdant son appétence par stagnation et accumulation.

Aucune de ces solutions n'est réellement satisfaisante pour l'alimentation en ration sèche.

Le remplissage de l'auge manuellement ou au moyen d'une trémie distributrice tractée fait intervenir de la main-d'œuvre, grevant ainsi le bilan économique de l'opération.

Concernant les systèmes de remplissage de l'auge par nourrisseur, les aliments ont tendance à tomber en excès dans l'auge, de sorte que le bétail ne les consomme pas au fur et à mesure : les aliments exposés à l'air et aux intempéries se dégradent, et de plus le bétail a tendance à jouer avec, les rendant non appétents et engendrant une sous-consommation.

On connaît de CH399056A un distributeur d'aliments pour l'engraissement des animaux, comprenant des vannes actionnées de manière automatique lors des déplacements du distributeur.

La présente invention a notamment pour objectif de surmonter ces inconvénients des dispositifs d'alimentation du bétail de la technique antérieure.

On atteint ce but de l'invention avec une trémie d'alimentation du bétail montée sur pieds, comprenant conformément à la revendication 1 a minima deux compartiments séparés par une paroi, chaque compartiment comportant chacun dans sa partie inférieure une ouverture de sortie respective pour les aliments, débouchant sur l'extérieur, et munie chacune d'une vanne comportant chacune une poignée d'actionnement permettant son ouverture ou sa fermeture manuelle indépendante et dans n'importe quel ordre, lesdites vannes étant du type à casque.

Avec une telle trémie, on peut gérer parfaitement la chute des aliments dans l'auge, en ouvrant manuellement la vanne du compartiment concerné, dans l'ordre souhaité. L'aliment doit être distribué au moins deux fois par jour et en petites quantités pour garder son appétence.

La présence d'au moins deux compartiments permet d'assurer une parfaite rotation des aliments : lorsque le premier compartiment est vide, et que le deuxième compartiment a baissé d'un certain niveau, on vient recharger les deux compartiments, et on continue à vider les aliments qui se trouvent dans le deuxième compartiment.

Lorsque le deuxième compartiment est vide et que le premier compartiment a été vidé par exemple de moitié, on procède à nouveau de la même manière, en remplissant les deux compartiments d'aliments, et en continuant à vider en priorité le premier compartiment.

Cette manière de faire permet d'assurer une rotation plus rapide des aliments dans chaque compartiment de trémie, par rapport à une trémie comportant un unique compartiment dont le volume serait égal à la somme des volumes des deux compartiments.

L'absence de passage commun pour la sortie des aliments provenant de chacun des compartiments, permet de supprimer tout risque de bourrage, et facilite considérablement les opérations de nettoyage.

On assure de la sorte une grande fraîcheur des aliments pour le bétail.

Les vannes à casque, d'une conception extrêmement simple, peuvent se refermer sous leur propre poids, et ne nécessitent aucun effort pour passer de la position fermée à la position ouverte, et inversement ; de plus, les risques de blocage des vannes à tirette sont éliminés.

Suivant d'autres caractéristiques optionnelles de la trémie selon invention, prises seules ou en combinaison :
- la trémie comporte trois compartiments séparés entre eux par deux parois, chaque compartiment comportant dans sa partie inférieure une ouverture de sortie d'aliments, et sa vanne associée : on commence par vider deux compartiments, puis lorsque le troisième est à moitié vide, on revient charger l'ensemble de la trémie en aliments, tout en continuant à vider le troisième compartiment ;
- la trémie comporte un couvercle articulé : un tel couvercle permet de protéger de l'humidité les aliments situés à l'intérieur de la trémie, des oiseaux, des autres animaux, des pailles et poussières de pailles lors du paillage et de tous corps étrangers venant de l'extérieur ;
- chaque compartiment est muni d'une lucarne transparente : une telle lucarne permet de visualiser le volume d'aliments restant dans le compartiment concerné ;
- ladite trémie peut aussi comporter une auge incorporée, disposée sous les ouvertures de sortie des compartiments : dans ce cas, l'ensemble monobloc constitué par la trémie et l'auge peut être facilement déplacé, par exemple par un chariot élévateur, en une seule opération.

D'autres caractéristiques et avantages de l'invention ressortiront à la lecture de la description qui suit, en référence aux figures annexées, qui illustrent :
[Fig. 1] : une vue en perspective d'une trémie à trois compartiments selon invention, son couvercle articulé supérieur étant fermé ;
[Fig. 2] : une vue en perspective de cette trémie à trois compartiments selon invention, le couvercle étant représenté en position ouverte, et une auge étant placée sous la trémie ;
[Fig. 3] : une vue de côté d'une vanne du type à casque placée sous l'un des compartiments de la trémie, le casque étant représenté en position fermée ;
[Fig. 4] : une vue de côté de cette même vanne, le casque étant représenté en position ouverte.

Pour plus de clarté, les éléments identiques ou similaires sont repérés par des signes de référence identiques ou similaires sur l'ensemble des figures.

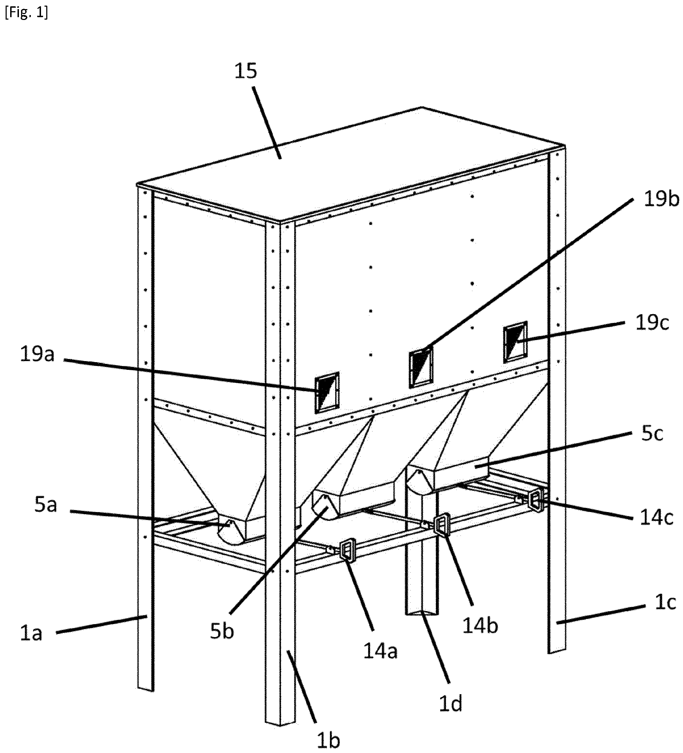

On se reporte à présent à la figure 1, sur laquelle on a représenté en perspective une trémie selon l'invention du type à trois compartiments.

Comme cela est visible sur cette figure, cette trémie, dont la forme générale et parallélépipédique, comporte quatre pieds 1a, 1b, 1c, 1d supportant trois compartiments 3a, 3b, 3c munis chacun d'une ouverture de sortie inférieure respective débouchant directement sur l'extérieur, munie d'une vanne 5a, 5b, 5c.

Par « directement sur l'extérieur », on entend que les ouvertures de sortie des compartiments ne débouchent pas sur un passage commun tel qu'une conduite ou un réceptacle de sortie communs qui déboucheraient eux-mêmes vers l'extérieur : lorsque les aliments situés dans chacun des compartiments 3a, 3b, 3c tombent par gravité, ils forment chacun un flux qui ne peut interférer avec les autres flux.

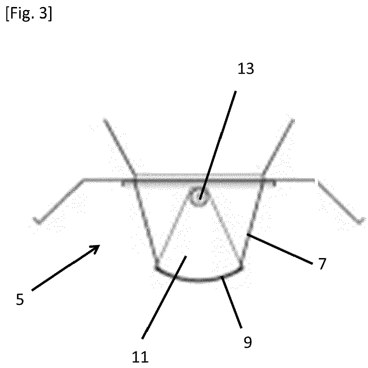

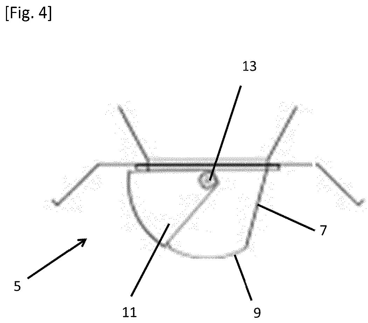

Chacune de ces vannes est une vanne à casque, telle que représentée sur les figures 3 et 4.

Comme cela est connu en soi, une telle vanne 5 comporte d'une part un bec 7 de forme sensiblement trapézoïdale, muni dans sa partie inférieure d'une ouverture 9, et d'autre part un casque 11, monté pivotant autour d'un axe 13, de manière à pouvoir se mouvoir d'une position d'obturation de l'ouverture 9 tel que représenté sur la figure 3, à une position de libération de cette ouverture 9, tel que représenté sur la figure 4.

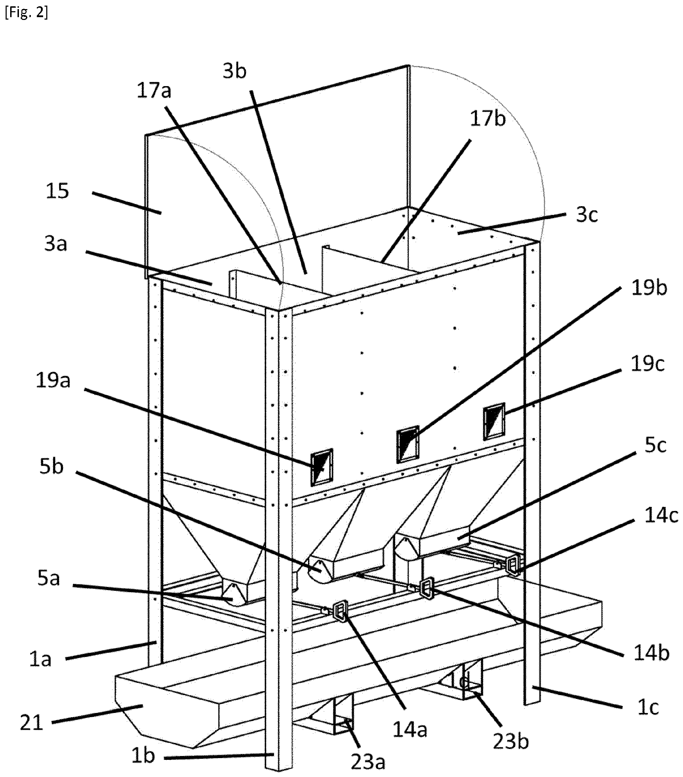

L'actionnement du casque 11 est effectué au moyen de poignées d'actionnement respectives 14a, 14b, 14c pour chaque vanne 5a, 5b, 5c, tel que représenté sur les figures 1 et 2.

Ces poignées d'actionnement permettent chacune d'actionner manuellement sa vanne respective entre sa position d'ouverture et celle de fermeture, indépendamment des autres vannes et dans l'ordre souhaité.

Comme cela est visible à la figure 2, la trémie selon l'invention comporte dans sa partie supérieure un couvercle 15 pouvant pivoter autour d'un axe sensiblement horizontal A, de manière à permettre le remplissage en aliments du volume intérieur de la trémie.

Les trois compartiments 3a, 3b, 3c sont séparés entre eux par deux cloisons 17a, 17b.

Des lucarnes transparentes 19a, 19b, 19c sont prévues de manière à pouvoir visualiser le volume d'aliments restant dans chaque compartiment 3a, 3b, 3c.

Sous la trémie selon l'invention, au droit de chacune des ouvertures de sortie des compartiments respectifs 3a, 3b, 3c, est disposée une auge 21.

Cette auge peut être séparée de la trémie selon l'invention, ou bien former partie intégrante de celle-ci.

Cette auge comporte dans sa partie inférieure des manchons 23a, 23b permettant la mise en place des fourches d'un chariot élévateur, de manière à déplacer l'auge, voir l'ensemble auge + trémie, lorsque ces deux éléments sont solidaires.

La trémie selon invention est réalisée de préférence en acier galvanisé, et à titre purement indicatif, ses dimensions peuvent être de l'ordre de 2 m de long, 2 m de haut, et 1 m de profondeur, et cette trémie peut avoir typiquement une contenance de l'ordre de 1500 kg.

Le mode d'utilisation et les avantages de la trémie qui vient d'être décrite sont les suivants.

Cette trémie peut être installée en extérieur, mais le plus souvent elle est installée à l'intérieur d'une étable ou stabulation, où se trouvent par exemple des bovins.

La trémie étant supposée vide au départ, on ouvre le couvercle 15 et on remplit chacun des trois compartiments 3a, 3b, 3c au moyen d'aliments pour le bétail, directement à partir d'un camion chargé en aliments.

Ces aliments peuvent être des granulés contenant par exemple un mélange de soja, de blé, de maïs et de colza, avec une granulométrie située typiquement entre 2 et 10 mm.

On referme ensuite le couvercle 15, et on remplit l'auge 21 de la quantité d'aliments souhaités, en agissant par exemple sur les vannes à casque 5a et 5c du premier 3a et du troisième 3c compartiments.

On répète cette opération typiquement deux fois par jour, à savoir une fois le matin et une fois le soir pour conserver l'appétence du produit.

Lorsque le premier 3a et le troisième 3c compartiments sont vides, on commence à utiliser le deuxième compartiment 3b, de manière à poursuivre le régime d'alimentation des bovins.

Lorsque ce deuxième compartiment 3b est en partie vide, par exemple à moitié vide, on lance une commande d'aliments, et on vient remplir à nouveau les trois compartiments 3a, 3b, 3c.

On continue de vider en priorité le deuxième compartiment 3b, seul ou avec le premier 3a ou le troisième 3c compartiment, de manière à obtenir les rations souhaitées.

Lorsque deux compartiments sur trois sont à nouveau vides, et que le troisième n'est plus qu'à à moitié plein, on recommence l'opération de commande et de chargement en aliments des trois compartiments de la trémie.

Comme on peut le comprendre à la lumière de ce qui précède, la séparation de la trémie en trois compartiments 3a, 3b, 3c que l'on vide totalement à tour de rôle, permet d'assurer une rotation rapide des aliments à l'intérieur de chaque compartiment, et ainsi de conserver une fraîcheur optimale de ces aliments.

Grâce aux ouvertures de sortie indépendantes de la trémie selon invention, on peut éviter qu'un reliquat d'aliments provenant d'un ou plusieurs compartiments 3a, 3b, 3c ne reste coincé dans un passage commun de la trémie.

On peut en particulier, de la sorte, assurer une rotation efficace des aliments contenus dans chaque compartiment 3a, 3b, 3c, en évitant tout mélange d'aliments plus anciens avec des aliments plus récents, et tout risque de bourrage.

L'indépendance des ouvertures de sortie des compartiments et de leurs vannes à actionnement manuel respectives 5a, 5b, 5c, offre une totale souplesse de la gestion de l'ordre et de la quantité d'utilisation des aliments.

Par rapport aux systèmes d'alimentation existants, la trémie selon l'invention permet, grâce à son alimentation par le haut et avec ses vannes à casque, de limiter le temps d'intervention de l'opérateur : on estime typiquement à environ 65 €HT le gain journalier pour un volume équivalent d'aliments distribués, et pour un élevage de 250 bêtes, par rapport aux solutions de l'état de la technique.

De plus, grâce à son compartimentage permettant une parfaite rotation des aliments, la trémie selon l'invention permet une distribution sans perte des aliments pour le bétail.

La trémie telle qu'exposée ci-dessus permet typiquement de nourrir de dix à quinze bovins pendant deux semaines, en assurant une fraîcheur maximale des aliments.

Naturellement, l'invention est décrite dans ce qui précède à titre d'exemple. Il est entendu que l'homme du métier est à même de réaliser différentes variantes de réalisation de l'invention sans pour autant sortir du cadre de l'invention définie par les revendications qui suivent.

L'invention couvre notamment des trémies comprenant seulement deux compartiments ou plus de trois compartiments.

## Revendications

1. Trémie d'alimentation du bétail montée sur pieds (1a, 1b, 1c, 1d), comprenant a minima deux compartiments (3a, 3b, 3c) séparés par une paroi (17a, 17b), chaque compartiment (3a, 3b, 3c) comportant chacun dans sa partie inférieure une ouverture de sortie respective pour les aliments, débouchant directement sur l'extérieur, et munie chacune d'une vanne (5a, 5b, 5c) comportant chacune une poignée d'actionnement permettant son ouverture ou sa fermeture manuelle indépendante et dans n'importe quel ordre, **caractérisée en ce que** lesdites vannes (5a, 5b, 5c) sont du type à casque.

2. Trémie selon la revendication 1, comportant trois compartiments (3a, 3b, 3c) séparés entre eux par deux parois (17a, 17b), chaque compartiment (3a, 3b, 3c) comportant dans sa partie inférieure une ouverture de sortie d'aliments, et sa vanne associée (5a, 5b, 5c).

3. Trémie selon l'une quelconque des revendications précédentes, comprenant un couvercle articulé (15).

4. Trémie selon l'une quelconque des revendications précédentes, dans laquelle chaque compartiment (3a, 3b, 3c) est muni d'une lucarne transparente (19a, 19b, 19c).

5. Trémie selon l'une quelconque des revendications précédentes, comportant une auge incorporée (21), disposée sous les ouvertures de sortie des compartiments (3a, 3b, 3c).

## Patentansprüche

1. Futtertrichter für Vieh, der auf Füßen (1a, 1b, 1c, 1d) montiert ist und mindestens zwei Fächer (3a, 3b, 3c) umfasst, die durch eine Wand (17a, 17b) voneinander getrennt sind, wobei jedes Fach (3a, 3b, 3c) in seinem unteren Teil jeweils eine Auslassöffnung für das Futter aufweist, die direkt nach außen mündet und jeweils mit einem Ventil (5a, 5b, 5c) ausgestattet ist, das jeweils einen Betätigungsgriff aufweist, der ein unabhängiges manuelles Öffnen oder Schließen in beliebiger Reihenfolge ermöglicht, **dadurch gekennzeichnet, dass** die Ventile (5a, 5b, 5c) vom Schiebertyp sind.

2. Trichter nach Anspruch 1, der drei Fächer (3a, 3b, 3c) aufweist, die durch zwei Wände (17a, 17b) voneinander getrennt sind, wobei jedes Fach (3a, 3b, 3c) in seinem unteren Teil eine Auslassöffnung für Futter und ihr zugehöriges Ventil (5a, 5b, 5c) enthält.

3. Trichter nach einem der vorhergehenden Ansprüche, der einen Klappdeckel (15) umfasst.

4. Trichter nach einem der vorhergehenden Ansprüche, wobei jedes Fach (3a, 3b, 3c) mit einer transparenten Luke (19a, 19b, 19c) versehen ist.

5. Trichter nach einem der vorhergehenden Ansprüche, der einen eingebauten Trog (21) aufweist, der unter den Auslassöffnungen der Fächer (3a, 3b, 3c) angeordnet ist.

## Claims

1. Livestock feed hopper mounted on feet (1a, 1b, 1c, 1d), comprising at least two compartments (3a, 3b, 3c) separated by a partition (17a, 17b), each compartment (3a, 3b, 3c) having a respective outlet opening for the feed in its lower part, opening directly to the outside, and each fitted with a valve (5a, 5b, 5c) each having an actuating handle allowing for independent manual opening or closing in any order, **characterised in that** the said valves (5a, 5b, 5c) are of the helmet type.

2. Hopper according to claim 1, including three compartments (3a, 3b, 3c) separated from each other by two partitions (17a, 17b), each compartment (3a, 3b, 3c) including in its lower part a food outlet opening, and its associated valve (5a, 5b, 5c).

3. Hopper according to either one of the preceding claims, comprising a hinged cover (15).

4. Hopper according to any one of the preceding claims, in which each compartment (3a, 3b, 3c) is fitted with a transparent window (19a, 19b, 19c).

5. Hopper according to any one of the preceding claims, including an incorporated trough (21) disposed beneath the outlet openings of the compartments (3a, 3b, 3c).
